Europäisches Patentamt

European Patent Office

Office européen des brevets

(11) Publication number: **0 183 938**
**B1**

# EUROPEAN PATENT SPECIFICATION

(45) Date of publication of the patent specification:
11.01.89

(51) Int. Cl.⁴: **F16M 11/24**

(21) Application number: **85112277.0**

(22) Date of filing: **27.09.85**

(54) Counterbalanced, height adjustable load carrying apparatus.

(30) Priority: **07.12.84 US 679677**

(43) Date of publication of application:
**11.06.86 Bulletin 86/24**

(45) Publication of the grant of the patent:
**11.01.89 Bulletin 89/2**

(84) Designated Contracting States:
**DE FR GB**

(56) References cited:
**DE-C- 362 421**
**DE-C- 385 758**
**FR-A- 2 503 049**
**GB-A- 182 475**
**US-A- 1 611 903**
**US-A- 3 269 681**
**US-A- 3 622 111**
**US-A- 3 890 907**

**IBM TECHNICAL DISCLOSURE BULLETIN, vol. 27,
no. 4A, September 1984, pages 2181-2183, New York,
US; J. GREENFIELD et al.: "Adjustable workstation
display"**

(73) Proprietor: **International Business Machines
Corporation, Old Orchard Road, Armonk, N.Y. 10504(US)**

(72) Inventor: **Yanker, George Michael, 6707 Shoal Creek
Blvd., Austin Texas 78758(US)**

(74) Representative: **Combeau, Jacques, Compagnie IBM
France Département de Propriété Intellectuelle,
F-06610 La Gaude(FR)**

## Description

### Field of the Invention

The present invention relates to a counterbalanced load carrying apparatus for the height adjustable positioning of a device, especially for carrying a display unit that is to be height adjustable relative to individual, ergonomical needs of an operator.

Display units for data terminals have become widespread. There will be a further enormous increase in numbers of display units especially in connection with personal and small computers. To make its use easier and to adapt the useability of the very same display unit to different operators, the need is increasing for an easy to manage, height adjustable, display unit. Hence, demands for a simple height adjustable device that is able to carry a load, especially a display unit, are considerable.

### Background Art

Counterbalanced load carrying devices are known in different designs. For example, US patent 3 622 111 describes a counterbalance for a gymnastic apparatus, such as parallel bars, which has one or more upright tubular columns. Each column is provided with a piston telescopically adjustable therewith. One or more spirally rolled springs of flat spring material, so-called constant force springs, are located within each column, the outer ends of the springs being fixed therein so that the spring axes are disposed transversally of the column axis. The lower end of the piston is in continuous contact with one of the springs so that as the piston is lowered, that spring together with any others, is unrolled thereby, and vice versa. The strength of the spring (or springs) is selected so that alone will maintain the piston and the carried load in equilibrium at any desired elevation.

Furthermore, US patent 3 890 907 describes a vertically adjustable overbed table including a pedestal, a horizontal table top mounted at the top of the pedestal, and a horizontal base platform at the lower end of the pedestal. the pedestal includes an upper/outer column which telescopes over a lower inner column, and a pair of constant force springs which are mounted within the columns to maintain the telescoping columns in equilibrium.

Both mentioned patents include telescoping column-like parts and constant force springs in a rather complicated design assembly. Both designs show a direct relationship between the length of the lift movement and the length of the unrolling of the constant force springs, so that relatively heavy-duty springs are usually necessary.

For relatively heavy loads like a display unit, heavy-duty springs would also be compulsory in a load carrying apparatus similar to the one described in British patent GB-A 182 475, wherein the whole load of a medical apparatus has directly to be supported by a rope connected by one of its end to a carriage supporting the medical apparatus and rolling on a vertical column. In said document, the other end of the rope is connected to the top of said column through a spiral spring acting on a drum with a constant torque.

There have also been efforts to develop a lift device for display units using a pressurized gas strut to support the weight of the display unit. However, it has been found that a negative characteristic of a gas strut is the fact that its pressure sealing device can take a rather firm grip on its telescoping shaft so that an additional unwanted break away force is required to reposition it after a reasonable period of nonuse. Those required forces exceed those which are considered acceptable for ease of use.

### Summary of the Invention

A main object of the present invention is to provide a counterbalanced load carrying apparatus especially for the height adjustable positioning of a display unit. A relatively simple, inexpensive and reliable mechanism is provided for conteracting the weight of the carried device and also for providing the necessary friction force to keep the unit in a stable equilibrium without the necessity of too much force for lifting or lowering the unit to a different position of stable equilibrium.

The present invention provides for a simple, ergonomically designed lift and tilting device to keep a carried load in a stable equilibrium. It also enables an operator to easily adjust the device in its height and tilt angle without too much force assuring that the device does not easily lose height because of any vibrations or inadvertent contacts. The mechanism of the disclosed invention applies a constant upward force to support a load such as a display unit at any height position. The mechanism also provides sufficient vertical frictional forces to reliably maintain the height yet allows an operator to easily reposition it. Further, the mechanism provides a means to tilt the load about its appropriate center of gravity providing stability through friction also at all tilt positions.

In accordance with a preferred embodiment of the present invention, one vertical column is fixed to a base and structured such that it provides guidance to a carriage that rides up and down on this vertical column. To that carriage the carrying arm is fixed such that the combined center of gravity of the carrying arm and display unit is located in close proximity to the tilt axis which is formed by the fixture by which the arm is secured to the carriage. On the carriage, a spring motor is provided that generates an essentially constant torque on its output shaft. To minimize the size of the spring motor, said torque is transmitted through a gear reduction transmission to a cable drum to which one end of a cable is fixed. The other end of that cable is fixed to the top of the column.

A special advantage of this embodiment is that on the very same cantilevered arm, loads of different widths can be carried and the load carrying device is independent from the load and can be handled independently.

## Brief Description of the Drawings

In the following, the invention will be described in detail in connection with the accompanying drawing showing in its embodiment one way of carrying out the present invention.

Fig. 1 is a front view of the lift device in accordance with the present invention, showing a display unit carried on a cantilevered cradle fixed to a carrier that rides inside a single vertical column that is attached to a control unit which forms the base.

Fig. 2 is a side view of the embodiment shown in Fig. 1, showing especially the guidance of the carriage inside the vertical column.

Fig. 3 is a top view of the arrangement shown in Figs. 1 and 2, showing especially the rectangular profile of the vertical column in which the carriage is guided to which the cradle is fixed.

Fig. 4 is an isometric view of a stand-alone version of the lift and tilt device in accordance with the present invention.

Fig. 5 is an enlarged side view of the carriage guided inside the vertical column and provided with a spring motor, a gear reduction transmission arrangement, and a cable drum.

Fig. 6 is a front view of the arrangement shown in Fig. 5.

Fig. 7 shows an alternative carriage carrying a spring motor with two spring supply spools, provided for carrying heavier loads but suspended in the very same vertical column as shown in Fig. 5 with a single spool spring motor.

## Detailed Description of the Invention

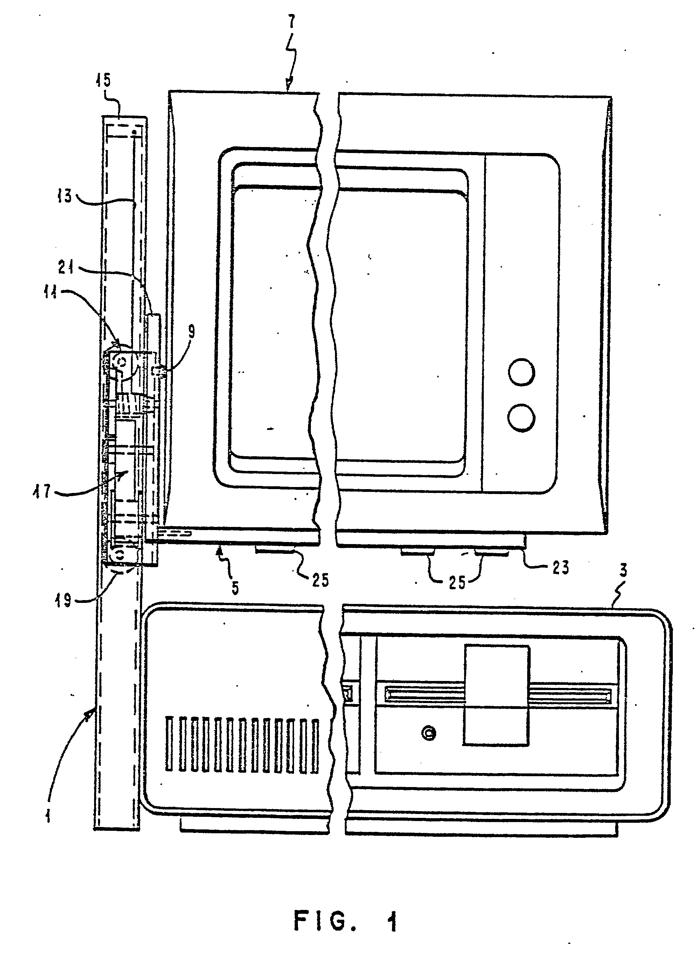

As shown in the different views of Figs. 1, 2 and 3 a vertical column 1 is attached to a base 3. Vertical column 1 may not be perfectly vertical as some tilt toward the operator has been demonstrated to be ergonomically desirable. A cantilever arm 5 serves as support for a load, such as display unit 7. Arm 5 is attached via screw means 9 to a carriage 11. Carriage 11 is guided by column 1 and provided to ride up and down it. Carriage 11 is connected via cable means 13 to the top 15 of column 1. On carriage 11, a constant force spring motor 17 is provided which generates the counterbalance force necessary to counteract the weight of load 7 together with the weight of asssociated arm 5 and carriage 11. Carriage 11 rides on four rollers 19, one on each corner , to reduce friction. Arm 5 can be tilted horizontally about screw means 9 to accommodate for different angles.

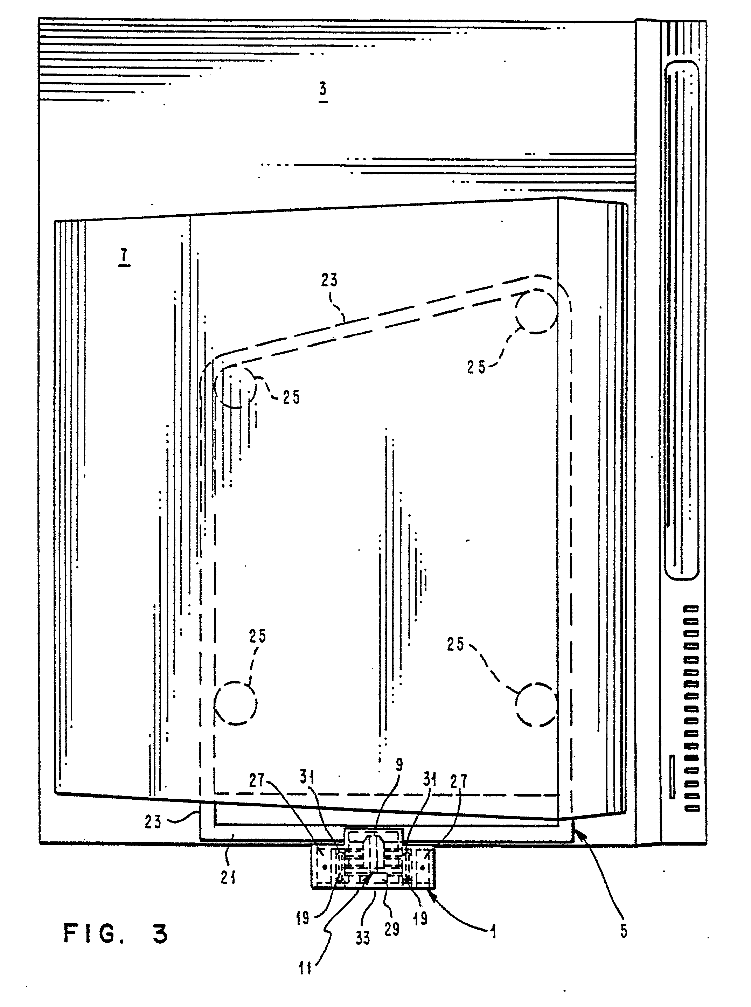

The arrangement shown in Figs. 1, 2 and 3 uses a control unit as base 3, a control unit, e.g., of a small computer, to which vertical column 1 is firmly attached by fixing means, not shown in detail. Load unit 7 might be an associated computer display unit. Arm 5 is made up of vertical supporting parts 21 and horizontal supporting parts 23. The horizontal supporting parts 23 are formed such, e.g., as a loop as best seen in Fig. 3, that a cradle is provided within which display unit 7, with its base feet 25, securely nests. Furthermore, the vertical parts 21 of arm 5 and its fixing means as well as its horizontal parts 23 are adapted such, relative to the location of screw means 9, that the center of gravity of unit 7 lies at least approximately on the horizontal tilting line provided by the axis of screw means 9. Thus, a stable position is achieved in all different tilting angles.

Vertical column 1 shown in the embodiment of Figs. 1, 2 and 3 consists of a hollow tube of rectangular cross section as best seen in the top view of Fig. 3. With the exception of a slot on the side facing arm 5, the tube is completely closed. The tube is provided with completely closed hollow chambers 27 on both sides of chamber 29, the main chamber in which carriage 11 rides up and down. On both sides of the slot through which a part of carriage 11 protrudes to the outside in the direction toward arm 5, guiding surfaces 31 are provided on which rollers 19 are guided. These friction reducing rollers are also guided by the opposite wall 33 of column 1.

Column 1 is preferably made from a drawn aluminum profile with sufficient wall thickness to provide enough stiffness to the construction. Likewise, for the vertical parts 21 and horizontal parts 23 of arm 5, drawn tubes, e.g., of steel, with round or rectangular cross section are preferably used.

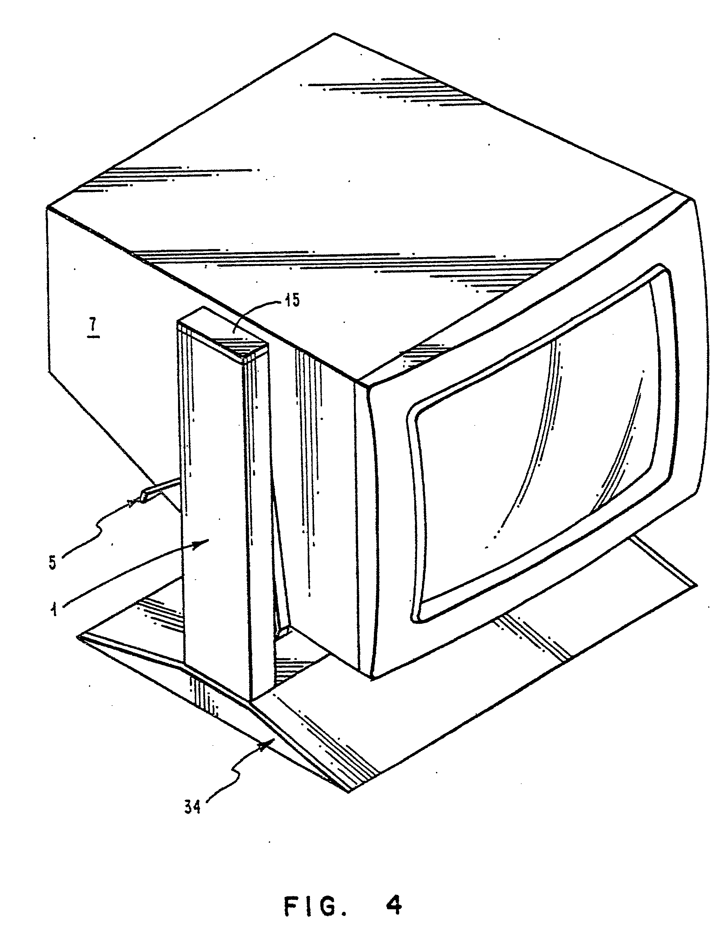

In Fig. 4, a stand-alone version of the counterbalanced load carrying apparatus in accordance with the present invention is depicted schematically. Vertical column 1 is fixed to a base pedestal 34. Display unit 7, on cantilevered arm 5, is securely carried on this free standing apparatus and can easily be lifted or lowered along column 1 and/or tilted back an forward about the horizontal tilting axis.

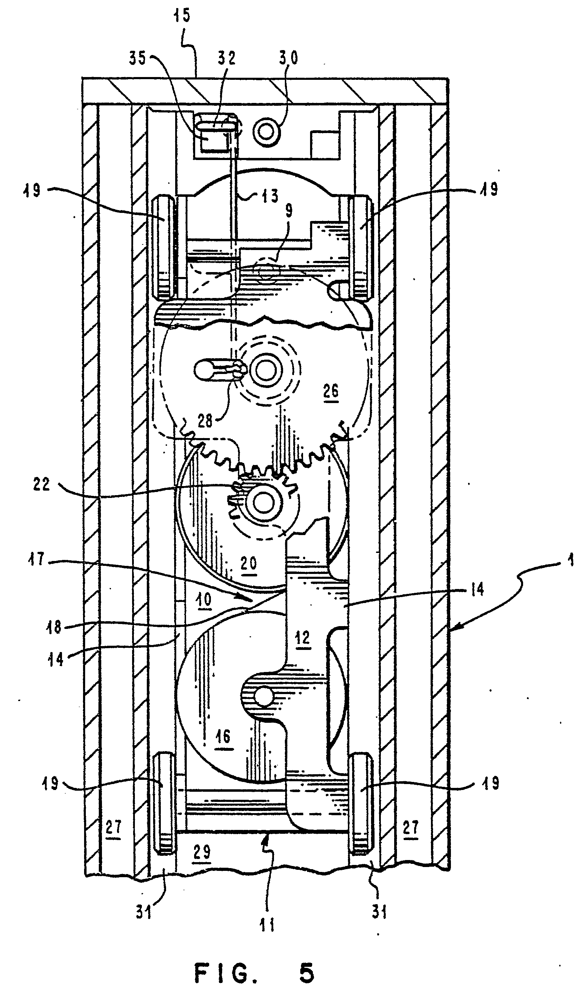

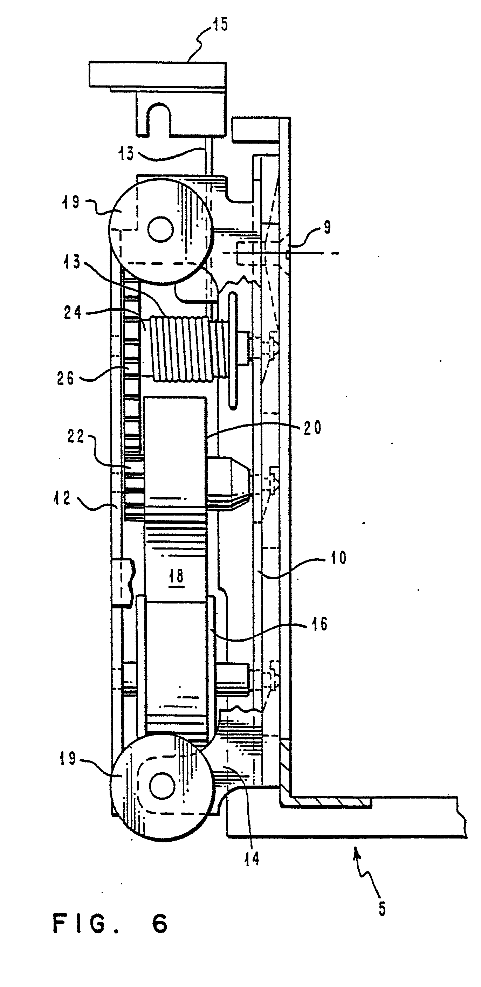

Fig. 5 is a view inside the hollow tube of column 1 through wall 33 showing the two side chambers 27 beside main chamber 29 and guiding surfaces 31 for rollers 19 of carriage 11. Fig. 5 also shows in more detail, in a side view, spring motor 17 attached to carriage 11 for generating the counterbalance force to a load fixed to carriage 11 by screw means 9. Fig. 6 shows, in front view, carriage 11 without column 1.

Carriage 11, as shown in Figs. 5 and 6, comprises a base wall 10, a top wall 12, and side walls 14. Between base wall 10 and top wall 12 is rotatably suspended a spool 16 carrying a coil of flat, band-like spring material 18, a second spool 20 on which spring 18 can be wound, and a drum 24. Fixed to drum 24 and corotating with it is a gear 26 with a large diameter. This gear 26 meshes with a gear 22 of considerably smaller diameter. Gear 22 is intergral to spool 20 and therefore corotates with it. Cable 13 is wound around drum 24 with one end having a knot 28 therein fixed to gear 26. The other end 32 of cable 13 is fixed around a stud 35 of top 15.

Spring 18 is wound tightly around spool 16 in the manner of a clock spring. The relaxed state of spring 18 is the one in which it is completely contained on spool 16. This spring is a so-called constant-force spring which requires about the same force to unwind it over the entire length of its unspooling distance. In unwinding spring 18 it is spooled or reverse wound, respectively, on spool 20 and provides an essentially constant torque on gear 22. Gear 22 drives gear 26 and therewith forms a gear transmission that provides drum 24 and cable 13 with an amplified, near-constant torque. The torque produced at cable drum 24 is designed to cause tension in cable 13 equal to the combined weight of the load made up by the display unit 7, the tiltable catilevered arm 5, and the carriage 11 with all the components within or attached to it. Thus, all these moving parts are supported in stable equilibrium at any height position. The spring 18 applies a dual-component torque to both gear 22 of drum 20 and the system, comprising, cable drum 24 and cable 13, to maximize output force with minimum spring material and spring size. The dual-component torque upon drum 20 is comprised of a tangential pull by spring 18 upon drum 20 plus the torque comprised of the couple placed upon drum 20 by spring 18 as spring 18 attempts to return to its state of lower stress an opposite curvature that it had before it was pulled off drum 16 and reverse bent around drum 20.

The work, as a product of force and distance, required by the operator to raise or lower display unit 7, is a function of the distance and the friction of the apparatus. The vertical force required by the operator to raise or lower display unit 7 is primarily determined by the type of bearings or bushings used to reduce friction between rotating parts within carriage 11. A certain amount of friction on the other hand is needed to retain the load in a stable counterbalanced state of equilibrium at any chosen height position. It is feasible to use only plastic parts and omit any special bearings, especially in the event of relatively lightweight loads, for example 8 to 10 kg in weight.

It has been found that a force between about 1.5 and 3 kg is most appropriate for an operator to use such a counterbalanced apparatus. In such a case, it is desirable, on the one hand, to have a force that is low enough to be able to be applied by a human operator, and that is, on the other hand, high enough for retaining the load in a stable state so that it cannot easily be moved down by inadvertent touches or vibrations. This means also that no special locking means have to be provided and used for fixing the display unit 7 in any chosen height position.

For best performace, an optimum combination of spring 18; diameters of drums 16, 20 and 24; and gears 22 and 26 is selected. In making these selections consideration is given to the fact that a constant force spring, such as spring 18 on drum 16, performs especially well over a long distance of unwinding. For example, the usual unwinding distance might be 150 to 200 cm. In accordance with that and the height distance to be covered by the conterbalaced load carrying apparatus, for example, about 15 to 20 cm, an optimum selection can be made.

In some applications, it might be necessary to keep the actuating force for the operator within certain tight limits over the entire height adjustment range. These limits sometimes might not be met by a design having a cable drum 24 that has a constant diameter. Therefore, to compensate for nonlinearities of the torque on gear 22 imposed by the varying diameters of the spring coil on drums 16 and 20, the diameter of cable drum 24 can be varied along its length, so that the grooved cylindrical drum 24 approximates a grooved truncated drum.

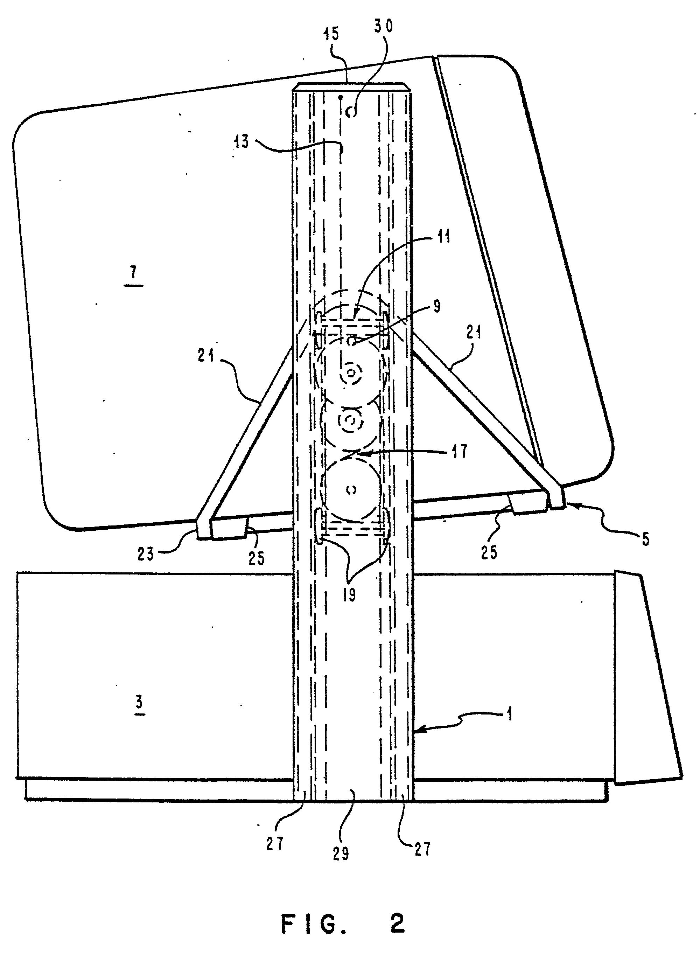

Carriage 11, together with attached cantilevered arm 5 and top 15, to which cable 13 is attached, can easily be removed from vertical column 1. Top 15 is formed as a cap such that it simply nests into the upper part of the hollow tube of column 1 with its main chamber 29 and the two lateral adjacent chambers 27. It is fixed there by a screw 30 as, for example, seen in Figs. 2 and 5.

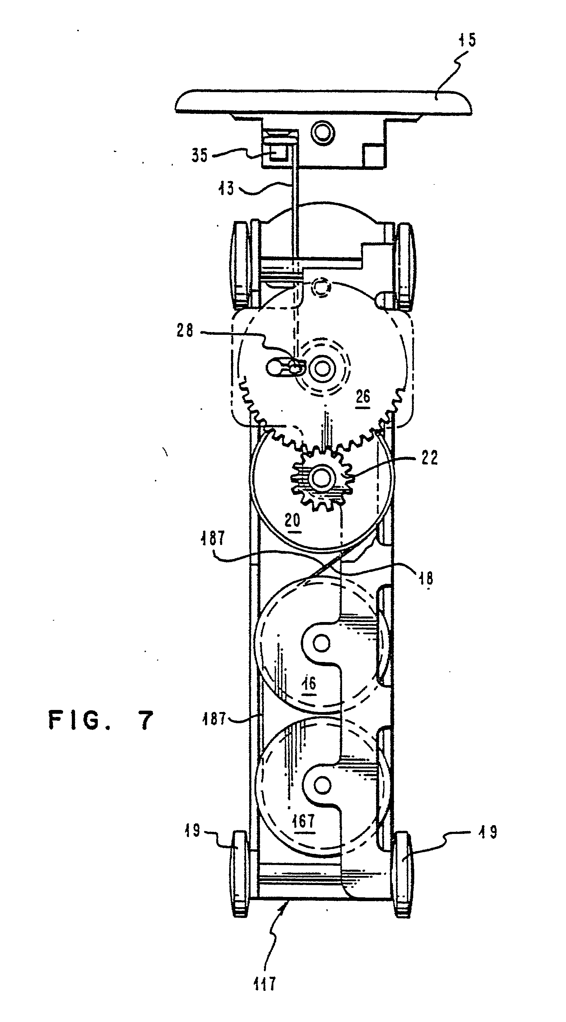

To accommodate the need to counterbalance loads of different weights, carriage 11 and spring motor 17, attached thereto, can be designed accordingly. Therefore, the spring motor might comprise a spring 18 of stronger force. Another solution to increase the force of the spring motor is shown in Fig. 7.

Fig. 7 shows in front view a carriage 117 with top 15 connected by cable 13. This view is similar to the one shown in Fig. 5 but with column 1 omitted. Carriage 117, which is made longer than carriage 11 of Fig. 5, supports a second spring drum 167 with a second spring 187. This second spring drum 167 is provided behind the first drum 16 in a tandem-like manner. Spring 187 is guided around the coil of first spring drum 16. Both springs, 18 and 187, are wound up together in double layers on drum 20 to increase the force of that spring motor. By this design a higher load can be carried but the carriage still fits into the same tube which forms the vertical column 1.

It is feasible to provide a set of carriages, each provided with a spring motor of a different specific force to accommodate different load weights. Those carriages are readily installed in one and the same vertical column. Thus, a very versatile design is provided. In similar manner, the form of cradle arm 5 can easily be adjusted and changed to fulfill requirements of differently designed loads, for example, different display units. Also, carriages might easily be provided with exchangeable arms of different shape.

Furthermore, it should be pointed out that it is not necessary that the carriage rides inside the vertical column. It is feasible to have a different design of a vertical column where the carriage rides on its outside. Furthermore, it is not necessary to have the spring motor carried by the carriage. It might be possible to have the spring motor stationary on the vertical column and coupled to the carriage by means of a cable.

## Claims

1. A counterbalanced load carrying apparatus for height adjustable positioning of a device (7), comprising a substantially vertical column (1) connected to a base member (3), a carriage (11) comprising rollers (19) for riding up and down on and being guided by said substantially vertical column (1), means (5) connected to said carriage for supporting said device (7), and spring means (17) coupled to said carriage (11) and connected to said vertical column (1) through cable means (13) for generating an essentially constant upward force substantially equal to the total weight of said device, said means, and said carriage, thereby supporting said device in stable equilibrium, apparatus characterized by the fact that it further includes a gear transmission (22, 26) attached on the one hand to an output shaft of said spring means (17), and on the other hand, to a cable drum (24) to which one end of said cable means (13) is fixed, the other end being fixed to the top (15) of said vertical column (1).

2. Apparatus according to claim 1, wherein said gear transmission (22, 26) includes a first gear (26) which corotates with said cable drum (24), said first gear (26) meshing with a second gear (22) of considerably smaller diameter, which corotates with a spool (20) carrying a coil of spring material (18) generating a constant torque on gear (22).

3. Apparatus according to claim 1 further comprising adjustment means (9, 21, 23) for connecting said means (5) to said carriage (11), said adjustment means including screw means (9) enabling said means (5) to be positioned at a plurality of angles with respect to said vertical column (1), and corresponding to the tilting of said means (5) about on horizontal tilting axis.

4. Apparatus according to claim 3, wherein the axis of said screw means (9), corresponding to said tilting axis, lies approximately on the horizontal line provided by the center of gravity of device (7).

5. Apparatus according to claim 3, wherein said adjustment means (9, 21, 23) comprise at least one vertical member (21) and at least one horizontal member (23), said at least one vertical member (21) having said screw means (9) coupled thereto.

**Patentansprüche**

1. Lasttraggerät mit Gegengewicht für die höhenverstellbare Positionierung einer Vorrichtung (7), eine im Wesentlichen senkrechte Säule (1) enthaltend, die mit einem Basisteil (3) verbunden ist, einen Wagen (11) mit Rollen (19) zum Auf- und Abfahren, mit Führung durch besagte im Wesentlichen senkrechte Säule (1), Mittel (5), die mit dem besagten Wagen verbunden sind, um besagte Vorrichtung (7) zu tragen, und Federmittel (17), die an den besagten Wagen (11) angekoppelt und mit der besagten senkrechten Säule (1) durch Seile (13) verbunden sind, um eine im Wesentlichen konstante nach oben gerichtete Kraft zu erzeugen, die substanziell gleich dem Gesamtgewicht der besagten Vorrichtung der besagten Mittel und des besagten Wagens ist, und dadurch die besagte Vorrichtung in stabilem Gleichgewicht hält, wobei das Gerät dadurch gekennzeichnet ist, daß es ferner ein Übertragungsgetriebe (22, 26) enthält, das auf der einen Seite mit einer Ausgangswelle der besagten Federmittel (17) und auf der anderen Seite mit einer Seiltrommel (24) verbunden ist, an der ein Ende des besagten Seils (13) befestigt ist, während das andere Ende an der Spitze (15) der besagten senkrechten Säule (1) befestigt ist.

2. Gerät gemäß Anspruch 1, in dem besagtes Übertragungsgetriebe (22, 26) ein erstes Getriebe (26) enthält, das sich gleichzeitig mit der besagten Seiltrommel (24) dreht, und besagtes erstes Getriebe (26) in ein zweites Getriebe (22) mit wesentlich kleinerem Durchmesser eingreift, daß sich gleichzeitig mit einer Rolle (20) dreht und eine Spule aus federndem Stoff (18) trägt, die auf das Getriebe (22) ein konstantes Drehmoment einwirken läßt.

3. Gerät gemäß Anspruch 1, ferner Angleichmittel (9, 21, 23) enthaltend, um besagte Mittel (5) mit besagtem Wagen (11) zu verbinden, wobei besagte Angleichmittel (5) Schrauben (9) enthalten, die es ermöglichen, besagte Mittel (5) in einer Mehrzahl von Winkeln in Bezug auf die besagte senkrechte Säule (1) zu positionieren, und der Neigung der besagten Mittel (5) um eine horizontale Neigungsachse entsprechen.

4. Gerät gemäß Anspruch 3, in dem die Achse der besagten Schraube (9) die der besagten Neigungsachse entspricht, annähernd auf der horizontalen Linie liegt, die durch den Schwerpunkt des Geräts (7) führt.

5. Gerät gemäß Anspruch 3, in dem besagte Einstellmittel (9, 21, 23) mindestens ein senkrechtes Element (21) und mindestens ein waagrechtes Element (23) enthalten, wobei die besagten Schraubmittel (9) an das besagte mindestens eine senkrechte Element (21) angeschlossen sind.

**Revendications**

1. Un appareil de transport de charge équilibré pour le positionnement réglable en hauteur d'un dispositif (7), comprenant une colonne pratiquement verticale (1) raccordée à un élément d'embase (3), un chariot (11) comprenant des rouleaux (19) chevauchant vers le haut et vers le bas et étant guidés par ladite colonne pratiquement verticale (1), des moyens (5) raccordés audit chariot pour supporter ledit dispositif (7), et des moyens à ressort (17) connectés audit chariot (11) et connectés à ladite colonne verticale (1) au travers du câble (13) pour générer une force dirigée vers le haut pratiquement constante et pratiquement égale au poids total dudit dispositif, lesdits moyens et ledit chariot supportant ainsi ledit dispositif en équilibre stable, ledit appareil étant caractérisé par le fait qu'il comprend en outre une transmission à pignons (22, 26) raccordés d'une part à un arbre de sortie desdits moyen à ressort (17) et, d'autre part, à un tambour d'enroulement de câble (24) auquel une extrémité dudit câble (13) est fixée, l'autre extrémité étant fixée au haut (15) de ladite colonne verticale (1).

2. Appareil selon la revendication 1 dans lequel ladite transmission à pignons (22, 26) comprend un premier pignon (26) qui tourne en même temps que ledit tambour d'enroulement de câble (24), ledit premier pignon (26) engrenant un second pignon (22) d'un diamètre beacoup plus petit qui tourne en association avec une bobine (20) portant un enroulement de matériau flexible (18) qui applique un couple constant au pignon (22).

3. Appareil selon la revendication 1 comprenant en outre des moyens de réglage (9, 21, 23) pour connecter lesdits moyens (5) audit chariot (11), lesdits moyens de réglage comprenant un moyen à vis (9) permettant auxdits moyens (5) d'être positionnés suivant une pluralité d'angles par rapport à ladite colonne verticale (1), et correspondant au basculement desdits moyens (5) autour d'un axe de basculement horizontal.

4. Appareil selon la revendication 3 dans lequel d'axe dudit moyen à vis (9) correspondant audit axe de basculement, est pratiquement disposé sur la ligne horizontale déterminée par le centre de gravité du dispositif (7).

5. Appareil selon la revendication 3 dans lequel lesdits moyens de réglage (9, 21, 23) comprennent au moins un élément vertical (21) et au moins un élément horizontal (23), ledit au moins un élément vertical (21) étant raccordé audit moyen à vis (9).

FIG. 1

F I G.   2

FIG. 3

FIG. 4

FIG. 5

FIG. 6

FIG. 7